# EUROPEAN PATENT APPLICATION

(11) **EP 1 370 082 A2**
(43) Date of publication of application: **10.12.2003**
(21) Application number: 03011660.2
(22) Date of filing: 22.05.2003
(51) Int. Cl.: H04N 7/16, H04N 7/173

(54) **Broadcast receiver, information processing apparatus, and information distributing method**

(30) Priority: 31.05.2002 JP 2002159512
(71) Applicant: Kabushiki Kaisha Toshiba, Tokyo (JP)
(72) Inventor: Miyazaki, Toru, 1-1 Shibaura 1-chome Minato-ku Tokyo 105 (JP)
(74) Representative: Henkel, Feiler, Hänzel

(57) **Abstract**

A broadcast receiver comprises a decoding section (16) which decodes an encoded charged broadcast signal, a distribution control section (24) which controls to a predetermined number of devices a condition for permitting distribution to an external television image receiver (V1, V2, V3), of the decoded voice/video image signal, and a communicating section (26) which identifies the external television image receiver (V1, V2, V3) under this control and makes communication so as to distribute the voice/video image signal. A charged broadcast can be freely distributed to an arbitrary television image receiver within a predetermined number of devices.

## Description

The present invention relates to a broadcast receiver which has a function for carrying out an encoding process of an accounting broadcast or the like, and particularly, to a broadcast receiver for distributing a received information signal to another image receiver at home or the like, an information processing apparatus, and an information distributing method.

In a conventional broadcast receiver (so called limited receiver) which has a function for carrying out an encoding process of an accounting broadcast or the like, a signal is encoded at a stage at which transmission is carried out with broadcast radio waves so that a viewer having purchased only a viewing permission of an arbitrary program can enjoy such a program, and such a program cannot be reproduced without a decoding function, thereby managing charged programs.

An operation of such a broadcast receiver handling an accounting program will be described here. First, an inputted signal of broadcast radio waves is frequency converted into an I/F frequency band by means of a tuner. The signal converted into the I/F band is demodulated by a demodulator, and a digital signal is sampled. As a typical tuner or demodulator, QPSK or 8PSK is utilized for satellite broadcasting, and a QAM scheme is widely used in a wired broadcasting network such as a cable network. Although there are a few examples of terrestrial broadcasts, 8VSK is employed in North American area, and a scheme called OFDM is employed in Europe.

The signal outputted from the modulator is in a state in which encoding is provided as described above. This signal cannot be provided to an audio/video decoder 18 such as MPEG as is. The above signal is decoded by means of a decoder to be in a form such that the signal can be processed by the audio/video decoder 18.

In decoding, a viewer makes an application for purchasing a program to a broadcasting service provider. This application may be made orally via a telephone or may be made in online. The broadcasting service provider assigns a permission for decoding a program specified for a receiver possessed by the viewer according to such an application from the viewer.

A decoding permission itself may be assigned by electrically providing information to a receiver by using a telephone line, assuming that broadcast radio waves or modem are provided at the receiver side. The receiver has identification information for identifying each one, namely, an ID key. Then, the identification information on a receiver having a decoding permission assigned thereto is drawn based on a predetermined computation processing, which limits a receiver in which decoding is possible. In addition, the receiver has a key data producing section which produces key information for carrying out decoding based on identification information and decoding permission information from a broadcasting service provider. The ID key itself is assigned from the broadcasting service provider. This ID key is completely incorporated into the broadcast receiver R by a ROM device or can be mechanically mounted removably by a smart card or a PC's MCIA card. Originally, although such a mount type key has provided a user with portability, there may be employed a scheme having incorporated therein a mechanism such that a mountable receiver cannot be changed without broadcasting service provider's permission in order to improve security.

The receiver starts a decoder operation based on this key information. In actuality, in order to start a decoding operation, it is required to further limit an operation so that only a program specified by the viewer is operated to be decoded. A program is specified in advance based on decoding permission information from the above broadcasting service provider. The receiver must identify whether or not an inputted program is the specified program. Program information is generally determined from identification information on programs included in an EPG (Electric Program Guide). A transport decoder samples these items of program information from an input signal, and delivers them to a decoding control device. The decoding control device supplies key data to the decoder based on program specification information from the key data producing section, and control an operation timing so as to operate the decoder relevant to only the specified program.

The transport decoder further separates voice/video image streams, and supplies them to an audio/video decoder. A video image output of the audio/video decoder is supplied to a video processing section, and a voice output is supplied to an audio processing section. A video image is displayed on a display device. As an interface with the display device, there is utilized a general analog type video/audio terminal or a D terminal which enables HD image transmission using a color difference signal in a new type of television receiver.

A system controller is composed of its periphery devices specifically represented by a microprocessor and memory. This system controller carries out sequence or job control of the entire receiver. Occasionally, part of the control data received from a model must fully assure its security. For example, in the case of making an application for accounting program viewing online, it is required to fully protect ID information or the like in order to reliably check and protect a person targeted for accounting. Thus, although there can be a case in which encoding is applied to such data, such data is extremely small in data size, as compared with video image or voice. Therefore, it is not always necessary to provide a dedicated device such as a decoder, and such data may be software processed by the above system controller.

In the case of receiving a program by using such a conventional limited receiver, it is general to connect one display device to one receiver. Physically, it is possible to connect one receiver output to a plurality of display devices. However, in this case, only one limited receiver selects a program, and thus, the only same program is always displayed on the connected display device. A limitation applies to a receiving channel caused by such limited reception. Thus, there has been a problem with a case in which a viewer possesses a plurality of televisions, and enjoys a program in another room.

That is, with respect to a method for connecting the limited receiver to a television image receiver that is a display device, it is possible to connect one television image receiver to an output terminal of such one limited receiver, or to connect a plurality of television image receivers by branching the one television image receiver. However, if such connection is made, the same program as that received by the limited receiver is supplied to all of the television image receivers, which lacks flexibility. While a plurality of limited receivers and a plurality of television image receivers are connected to each other, an arbitrary broadcast is received by each of the limited receivers, whereby such each limited receiver can select a program or channel freely. However, a plurality of limited receivers must be provided, resulting in high cost. Further, the limited receivers are reconnected to an arbitrary one of a plurality of television image receivers according to the viewing contents, whereby an arbitrary broadcast signal can be supplied to a proper television image receiver. However, there has been a problem that wiring must be reconnected every time, and the user's burden is increased.

A technique for sharing a management signal or the like in the case where a plurality of receivers for receiving an accounting broadcast or the like are provided at home is disclosed in Jpn. Pat. Appln. KOKAI Publication No. 2001-298722. In this reference, there is disclosed a technique for carrying out an authentication processing by referring to ID information mutually among a plurality of receivers connected via a network, thereby making it possible to share contract information or the like, to share a line connection function, and to smoothly receive a plurality of accounting broadcasts or the like at home, etc. However, in this technique as well, broadcast receivers for charged broadcasting are provided in plurality, and a display device such as a television image receiver is provided to be connected in correspondence with each of these broadcast receivers. Thus, there has been a problem that the system cost is increased.

That is, in the conventional apparatus, in the case where an attempt is made to freely view a plurality of accounting broadcasts or the like on a plurality of display devices at home, etc., there is employed a method for rewiring one broadcast image receiver and a plurality of television image receivers or the like as required, or a method for purchasing a plurality of broadcast image receivers, connecting a television image receiver to a respective one of the broadcast image receivers, and viewing the image. In the former scheme, there has been inconvenience that a user must be rewired the broadcast image receiver and television image receiver according to a use condition. In the latter scheme, there has been a problem with higher cost due to the purchase of a plurality of broadcast image receivers or higher space requirements due to setup of such image receivers.

It is an object of the present invention to provide a broadcast receiver, an information processing apparatus, a communication apparatus, and an information distributing apparatus for providing a broadcast receiver which distributes a decoded broadcast signal by limiting the number of devices specified as a distribution destination, thereby enabling a viewing system at a low cost and at a high degree of freedom.

The present invention has been made in order to solve the above-described problems. According to the present invention, there is provided a broadcast receiver comprising:
a decoding section which decodes an information signal demodulated upon receipt of an encoded broadcast signal;
a distribution control section which limits to a predetermined number of devices a condition for permitting distribution of the information signal decoded by the decoding section to an external device; and
a communicating section which identifies the external device under the control of the distribution control section, and distributes the information signal decoded by the decoding section.

In the broadcast receiver according to the present invention, as described above, the number of external display devices such as television image receivers is limited by providing a distribution control section, and a broadcast signal such as accounting broadcast is distributed. In this manner, unlike a conventional apparatus, for example, in the case where an attempt is made to arbitrarily view accounting broadcast at home by using a plurality of television image receivers, there is no need to reconnect the broadcast receiver and the display device to each other according to a desired program, or to provide one broadcast receiver to one television image receiver. Therefore, it is possible to construct a viewing system such as accounting broadcast with a low cost and with high degree of freedom, the viewing system capable of protecting a copyright of contents.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting an example of a broadcast receiver, a television image receiver, and a communication apparatus according to one embodiment of the present invention;
FIG. 2 is an illustrative view illustrating an example of a permissible list according to one embodiment of the present invention;
FIG. 3 is a flow chart showing an example of a distribution limitation processing of a broadcast receiver according to a first embodiment of the present invention;
FIG. 4A and FIG. 4B are illustrative views of an example of a screen for selecting a distribution stop device of the broadcast receiver according to the present invention;
FIG. 5 is a block diagram depicting another example of a broadcast receiver according to a second embodiment of the present invention;
FIG. 6 is a flow chart showing an example of a permissible list change processing of a broadcast receiver according to a third embodiment of the present invention; and
FIG. 7 is a block diagram depicting an example of an optical disk device according to a fourth embodiment of the present invention.

Hereinafter, a broadcast receiver, an information processing apparatus, a communication apparatus, and an information distributing method according to preferred embodiments of the present invention, will be described in detail with reference to the accompanying drawings.

### <Broadcast receiver, television image receiver, and communication apparatus>

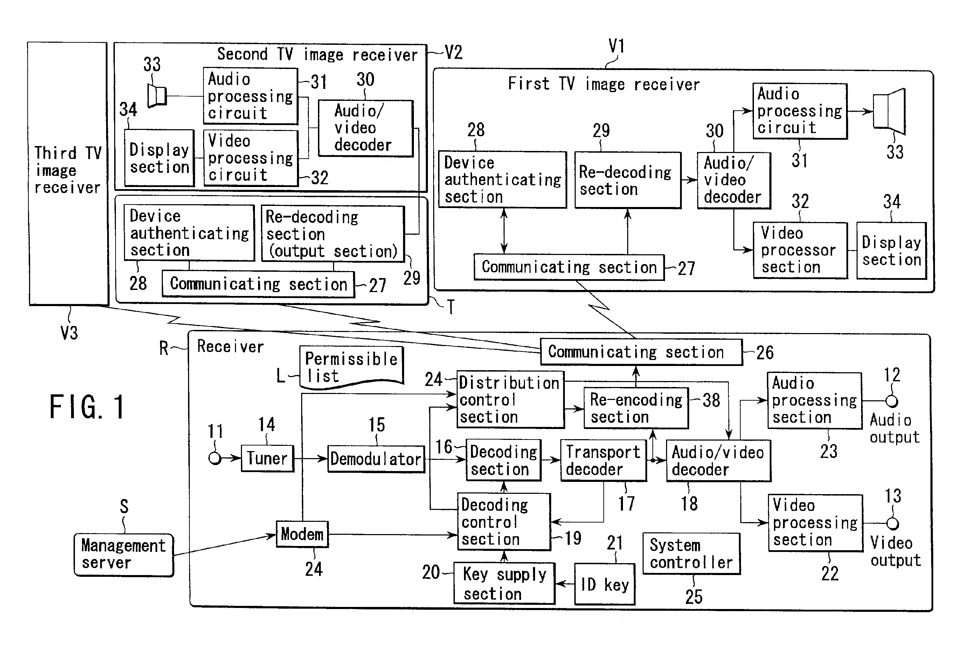

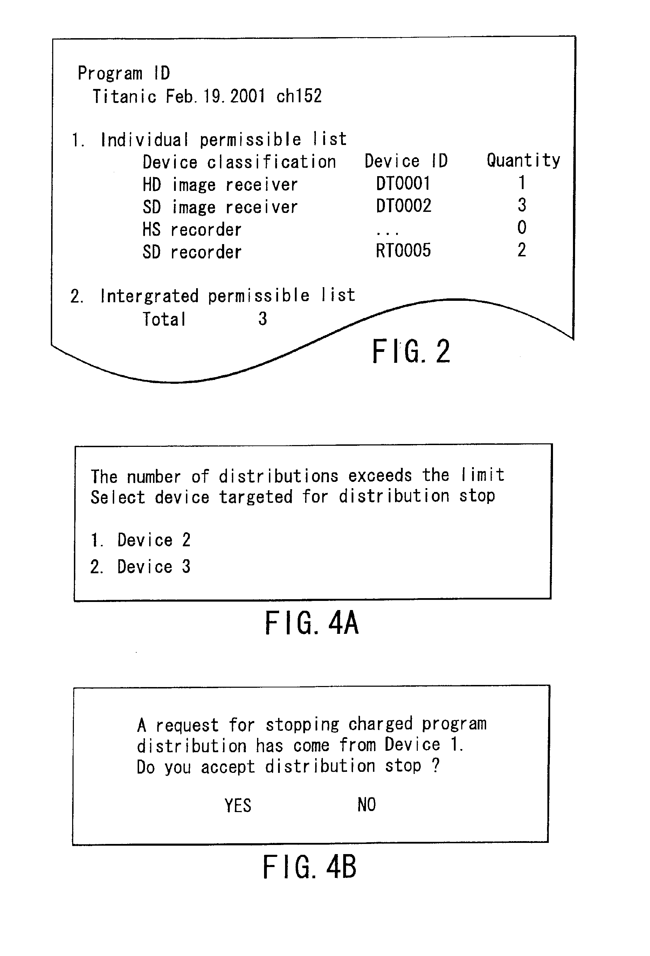

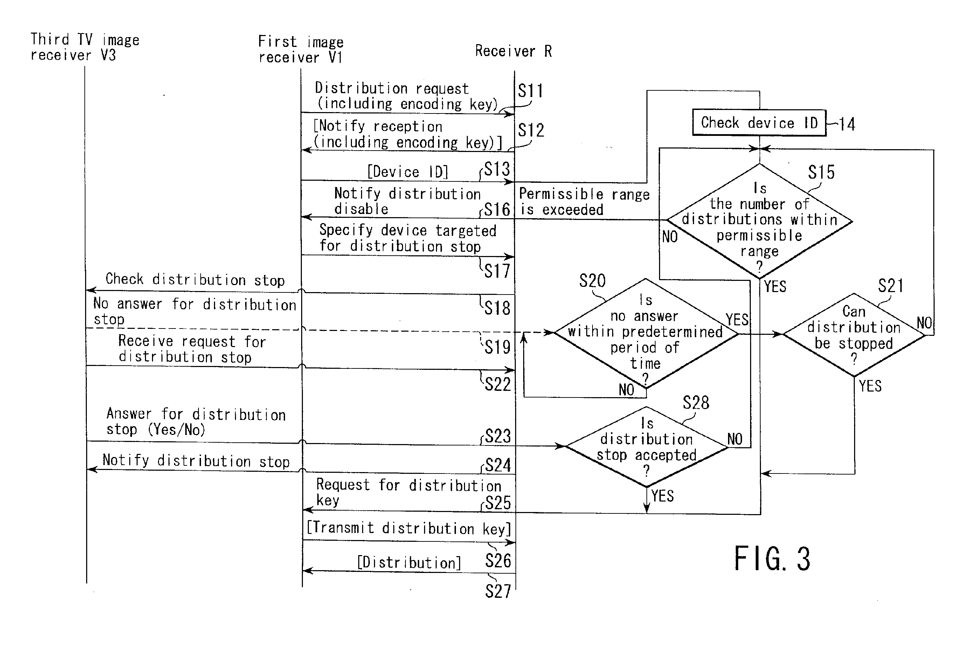

FIG. 1 is a block diagram depicting an example of a broadcast receiver, a television image receiver, and a communication apparatus according to one embodiment of the present invention. FIG. 2 is an illustrative view illustrating an example of a permissible list according to one embodiment of the present invention. FIG. 3 is a flow chart showing an example of a distribution limitation processing of a broadcast receiver according to a first embodiment of the present invention. FIG. 4A and FIG. 4B are illustrative views of an example of a screen for selecting a distribution stop device of the broadcast receiver according to the present invention.

A broadcast receiver R that is a limited receiver according to the present invention, as shown in FIG. 1, has: an antenna terminal 11 to which a signal from an external antenna is supplied; a tuner 14 connected to the antenna terminal and demodulating the signal; and a demodulator 15 for modulating a broadcast signal of a channel selected by the tuner 14. Further, when the broadcast signal demodulated by the modulator 15 is used for a charged broadcast such as an accounting broadcast, it denotes a scrambled and encoded broadcast signal. Thus, this broadcast signal is supplied to a decoding section 16 for decoding it. Further, this decoding section 16 is connected to a decoding control section 19 which controls this decoding operation. The decoding control section 19 is connected to an external management server S, and a signal is supplied from a communication modem 24 for carrying out communication. Further, a distribution control section 24 connected to the communication modem 24 is provided, and is also connected to the decoding control section as well.

Further, the decoding control section 19 is connected to a key supply section 20 connected to an ID key 21. The key produced at the key supply section 20 is supplied to the decoding control section 19, whereby a decoding process of the decoding section 16 is carried out.

Furthermore, an output from the decoding section 16 is supplied to a transport decoder 17. An output of the transport decoder 17 is connected to a re-encoding section 38 to which a control output from the distribution control section 24 is to be supplied. The thus re-encoded signals at the re-encoding section 38 are transmitted respectively via a communicating section 26 to an external first television image receiver V1, a communication apparatus T connected to a second television image receiver V2, and a third television image receiver V3.

Moreover, a broadcast signal outputted from the transport decoder 17 is supplied to an audio/video decoder 18 as well at the same time. An audio signal is supplied to an audio processing section 23, and a video signal is supplied to a video processing section 22, respectively. Then, the audio signal processed at the audio processing section 23 is outputted to an audio output terminal 12, and the video signal processed at the video processing section 22 is outputted to a video output terminal 13, respectively. A system controller 25 is provided as a controller which integrally controls these entire operations.

On the other hand, such information processing apparatuses in which a voice/video image signal is distributed from a broadcast receiver for an encoded broadcast such as an accounting broadcast according to the present invention, include: television image receivers V1, V2, and V3; a communication apparatus T; and an information recording/reproducing apparatus such as an optical disk recording/reproducing apparatus (not shown). Here, a re-encoding section 29 of the communication apparatus T is compatible with an output section for outputting a signal to the television image receiver V2.

The first television image receiver V1 or third television image receiver V3 shown in FIG. 1 has; a function for receiving a voice/video image signal distributed from the broadcast receiver R having a distributing function according to the present invention; and a function for making a response to the broadcast receiver R, as well as a general television receiver's function. Further, the second television image receiver V2 is a general television image receiver which has an input terminal. The communication apparatus T has a function for receiving a voice/video image signal and a function for making a response to the broadcast receiver R of the invention. Therefore, in the case where an information distributing system according to the present invention is introduced into a general family having a plurality of general television image receivers, one broadcast receiver R and communication apparatuses T corresponding to television image receivers in number may be provided.

The first television image receiver V1 has: a communicating section 27 for making communication with a communicating section 26 of the broadcast receiver R; a device authenticating section 28 connected to the communicating section 27, for carrying out an identification processing of the first television image receiver V1; and a re-decoding section 29 for re-decoding and reproducing the voice/video image signal acquired from the communicating section 27. Further, this image receiver has: an audio/video decoder 30 for decoding the voice/video image signal decoded by the re-decoding section 29; an audio processing section 31 for processing the decoded audio signal; a video processing section 32 for processing the decoded video signal; a speaker in which an output from the audio processing section 31 is supplied; and a display section 34 for displaying a video image after the video signal has been supplied from the video processing section 32. Further, the third television image receiver V3 may have a structure identical to the first television image receiver.

In addition, the second television image receiver V2 is a general television image receiver. This image receiver has at least the audio/video decoder 30, the audio processing section 31, the video processing section 32, the speaker 33, and the display section 34 as described with respect to the television image receiver 1. The communication apparatus T is provided as an interface between a general television and the broadcast receiver R according to the present invention. This communication apparatus has at least the communicating section 27, the device authenticating section 28, and the re-decoding section 29 as shown with respect to the first television image receiver V1.

### <Description of operation of broadcast receiver according to first embodiment>

According to a first embodiment, a broadcast receiver capable of arbitrarily changing a distribution destination in the range of a permissible list and an information processing apparatus such as a television image receiver according thereto, are provided to information processing apparatuses such as a plurality of television image receivers.

In the broadcast receiver R according to the present invention, having the above-described configuration, a distributing operation will be described here. In FIG. 1, the broadcast receiver R is a so-called limited receiver for receiving an accounting program from a broadcasting service provider, and reproducing the program. A description will be given, assuming a case in which the first television image receiver V1, the second television image receiver V2 connected to the communication apparatus T, and the third television image receiver V3 each are installed in another room, thereby receiving weak radio waves of a voice signal and a video image signal distributed from the broadcast receiver R.

A radio wave signal distributed from the broadcasting service provider is inputted to the antenna terminal 11. The inputted radio signal is tuned by the tuner 14 in accordance with a channel number. The tuned radio signal is converted into a signal obtained by weighting a signal at a predetermined carrier frequency irrespective of a channel frequency. The thus obtained signal is then converted into an actual digital signal by a demodulator 15. A signal outputted from the demodulator 15 is in a state in which encoding is carried out by the broadcasting service provider. Thus, this outputted signal cannot be provided to the audio/video decoder 18 such as a MPEG (Moving Picture Coding Experts Group) as is. The above signal is decoded by the decoding section 16 to be in a form such that processing can be carried out by the audio/video decoder 18. In a decoding technique, first, a decoding key is produced by the key supply section 20 based on the ID key 21. Then, key management required for decoding by the decoding section 16 is carried out by the decoding control section 19 based on this decoding key; program information concerning an encoded program notified from the broadcasting service provider's management server S via the modem 24; and current reception program information extracted by the transport decoder 17.

At least information concerning an encoding technique exchanged between the management server S and the modem 24 should be encoded in order to ensure security. This data is extremely small in volume, as compared with a video image signal or a voice signal, and there is no need to provide a large resource in order to carry out decoding. Therefore, the above data can be handled by a software processing using the system controller 25, and can be processed by providing a dedicated resource in the modem 24.

The transport decoder 17 further separates voice/video image streams, and supplies these streams to the audio/video decoder 18. A video image output of the audio/video decoder 18 is supplied to the video processing section 22, and a voice output is supplied to the audio processing section 23. Finally, these outputs are supplied to a speaker or display (not shown) via the audio output terminal 12 or the video output terminal 13.

As an interface with the output terminals, there can be utilized a general analog type video/audio terminal or a D terminal enabling HD image transmission using a color difference signal in a new type of television image receiver.

Now, a description will be given with respect to a function capable of distributing an accounting program encoded by a broadcasting service provider to an arbitrary one of a plurality of television image receivers or the like, which is the most characteristic operation of the broadcast receiver R according to the present invention.

First, display destination limitation information (hereinafter, referred to as "a permissible list") is received from the broadcasting service provider's management server S via the modem 24. This permissible list provides the broadcast receiver R with information on what device type and how many devices are permitted to be distributed by the broadcasting service provider in order to ensure final program display.

FIG. 2 shows an example of this permissible list. In this example, the permissible list is divided into an individual permissible list in which device type of the distribution destination or its modality specification are limited in detail and an integrated permissible list showing a total number of devices of the distribution destination. The integrated permissible list merely specifies how many devices are permitted for TV display or VCR recording in order to ensure viewing without particularly specifying the device of distribution destination, as illustrated. On the other hand, in the individual permissible list, the type and number of devices which can be finally received are further limited. For example, one hard disk television image receiver and two SD television image receivers are limited. Therefore, in this example, limitation of the integrated permissible list should take its priority highly. For example, a total of four television image receivers which comprise three SD television image receivers and one hard disk television image receiver are not permitted for reception. In this example of permissible list, as illustrated, limitation applies to a predetermined program. Of course, a plurality of programs may be specified for the same contents of permission by continuing a one-week program in one list, or the contents of permission may be specified on a channel by channel basis.

This management list is stored in the distribution control section 24. Further, the distribution control section 24 knows a current encoding state from the decoding control section 19. This control section is intended to determine what information in the above permissible list corresponds to a currently received program. The distribution control section 24 manages a variety of sequences or job resources in order to ensure distribution. This control section is basically composed of a CPU and its software.

The broadcast receiver shown in FIG. 1 further comprises a distributing device composed of the re-decoding section 38 and the communicating section 26 as well as video/audio terminals 12 and 13 which are identical to conventional ones, as an output destination of final video image/voice signal of a television image receiver or the like. In this example, the communicating section 26 assumes a digital type radio communication apparatus using weak radio waves. Specifically, radio waves of 5G band or the like represented by IEEE 802 currently discussed in IEEE are available for use. In addition, the communicating section 26 can utilize a wired network or Ethernet such as IEEE 1394 or USB 2.0 in the world of PC (personal computers).

Further, in this distribution, the re-encoding section 38 is required so that a video image/voice signal cannot be reproduced by a device permitted as a destination as a result of specifying a receiving destination. Although there area a variety of encoding techniques, an algorithm such as DES (Data Encryption Standard) is well known. A technique of this re-encoding section 38 is basically intended to encode a video image and a voice. It is preferable that this technique has high security.

In the case where a video image/voice signal is distributed among the broadcast receiver R, the first television image receiver V1, the communication apparatus T connected to the second television image receiver V2, and the third television image receiver V3, an authentication processing must be carried out to check what type of the counterpart receiver is. Although an authentication technique is specified for video image/voice in accordance with IEEE 1394 or the like, for example, such an authentication technique can be utilized as well. Therefore, in this authentication work, information on a decoding key for decoding a video image/voice signal encoded by each television image receiver must be notified.

### (Procedure for distributing processing)

A distribution control section 24 controls selection of an external television image receiver or the like for finally distributing a video image/voice signal from the above described management list and a current decoding state. Now, a specific control method will be described here.

First, in the case of a program which is not encoded, and which is eventually permitted for reception by an unspecified number of counterparts, or alternatively, in the case where reception a an unspecified number of receivers is permitted in a permissible list, these programs are determined to be out of protection of copyright. These programs are determined to be freely receivable by any counterpart whatever it may be. In this case, it is not always necessary to decode a video image/voice signal among the broadcast receiver R and first television image receiver V1, the communication apparatus T connected to the second television image receiver V2, and the third television image receiver V3. Of course, there is no problem even if encoding is carried out. The same key may be supplied to the first television image receiver V1, the communication apparatus T connected to the second television image receiver V2, and the third television image receiver V3 in order to ensure such decoding.

Now, a description will be given with respect to a distribution destination in the case where a certain limitation applies to a receiver in which encoding is carried out, and finally reception is enabled. In this case, in an initial state, for example, when power is first turned ON, or when the broadcast receiver R is reset from the broadcasting service provider via a user or server, it is desirable that a video image and voice be first outputted from the output terminals 12 and 13 that are native outputs of this broadcast receiver R. This is because a minimum number of output terminals are maintained by limiting an output destination in an initial state such as a reset state.

Now, an example of changing a viewing destination of program to the first television image receiver V1 based on the user's discretion will be described here. At this time, assume that a permissible list has permitted viewing to only one television image receiver irrespective of type of the device of connection destination.

At this time, in the case where the user starts using the third television image receiver V3, distribution to the first television image receiver V1 and the output terminals 12 and 13 must be stopped. The distribution control section 24 controls the re-encoding section 38 to stop program distribution to these first television image receiver V1 and the output terminals 12 and 13.

As a stopping technique, therefore, although a technique for stopping an output is exemplified, there is no problem with a technique for encoding by means of the re-encoding section 38 using a technique such that a code cannot be solved relevant to a television image receiver V1. In the former case, nothing is generally displayed on a screen at the receiver side. However, in the latter case, there is a possibility that certain noise is displayed.

### (Processing for changing distribution destination)

Further, procedures for changing a distribution destination by a user having moved from the third television image receiver V3 to the first television image receiver V1 will be described in detail with reference to a flow chart shown in FIG. 3.

In this case, only viewing by one television image receiver is permitted in a viewing permission list from a broadcasting service provider. Thus, distribution to the third television image receiver V3 is first stopped. In order to stop this distribution, the procedures for that purpose must be followed. FIG. 3 shows an example of check communication procedures among the first television image receiver V1, the third television image receiver V3, and the broadcast receiver R. In the figure, the communications enclosed within brackets [ ] denote procedures encoded and communicated in order to prevent information leakage described later.

The communications shown in FIG. 3 are physically carried out by using the communicating section 26 of the broadcast receiver R, the communicating section 27 incorporated in the first television image receiver V3, and a like communicating section (not shown) incorporated in the third television image receiver V3. Interactive management and operational sequences in communication shown in FIG. 3 are processed by a system controller basically incorporated in each device (system controller 25 in the broadcast receiver R). Hereinafter, a description will be continued with reference to FIG. 3.

First, a request is made so as to change a distribution destination from the first television image receiver V1 serving as a device of a new distribution destination to the broadcast receiver R (S11). In the case where the broadcast receiver R transmits highly confidential information in the next step or subsequent to the first television image receiver V1, the image receiver transmits an encoding key for encoding transmission data to the broadcast receiver R. This encoding key must be made different every time communication is carried out. As an encoding key for decoding encoded data, there is used a confidential, unique technique such that the first television image receiver V1 cannot decode the data.

Having received this request, the broadcast receiver R transmits its return to the first television image receiver V1, and assigns to the first television image receiver V1 key data for carrying out encoding similarly relevant to next and subsequent important data (S12). It is desirable that this key data be encoded by an encoding key transmitted from the first television image receiver V1 described above.

Having received the response from the broadcast receiver R and the encoding key, the first television image receiver V1 transmits its entity or device ID that is device type information to the broadcast receiver R (S13). These items of information are encoded by the encoding key from the broadcast receiver R.

The broadcast receiver R having received the device ID carries out correlation to make checks with its own permissible list delivered from the broadcasting service provider (S14). In the case where only a total number of receivable devices is simply specified for a currently received program, the device ID of the first television image receiver V1 is not so important. However, in the case where limitation is applied to type or entity of receiver, the distribution control section 24 determines whether or not there is infringement against this limitation. Then, it is determined whether the number of distributions is within a permissible range (S15).

In the case where the permissible range is not exceeded, preparation for distribution is started immediately. Upon program distribution, therefore, a video image/voice signal should be encoded from the viewpoint of its copyright protection. The setup of the encoding technique for that purpose is first started. That is, after a distribution key is requested to the first television image receiver V1 (S25), when the first television image receiver V1 transmits this distribution key (S26), the broadcast receiver R receives the distribution key, and distributes the video image/voice signal (S27).

In this example of FIG. 3, although there is shown an example such that a specific encoding key is obtained by using a technique which is similar to that during entity check, such a technique must not be always used. In particular, a video image/voice signal is tremendous in transfer quantity, as compared with data for information exchange as described above, thus, making it possible to carry out like procedures according to such tremendous transfer quantity.

In step S15, if it is determined that the first television image receiver V1 being a new distribution destination exceeds a permissible range, distribution to at least one video image receiver must be stopped. Therefore, the notification of distribution disable is transmitted from the broadcast receiver R (S16). Concurrently, the first television image receiver V1 can specify another image receiver to be stopped.

Now, a description will be given here with respect to a case of stopping distribution to the third television image receiver V3.

Assume that there are a plurality of television image receivers whose distribution can be stopped. In this case, there exist a device 2 that is a communication apparatus T connected to the second television image receiver V2 and a device 3 that is the third television set V3. Therefore, in the first television image receiver V1, for example, the GUI message as shown in FIG. 4 is displayed on a screen, a user oneself makes a selection, and a signal for specifying a device whose distribution is stopped is transmitted to the broadcast receiver R (S17).

The broadcast receiver R having received this signal supplies a distribution stop check signal to the third television image receiver V3 (S18). This process prevents the user from being confused in the case where another user has already viewed a program by using the broadcast receiver R, if program distribution is stopped without notice. The third television image receiver V3 having received stop check causes the GUI message shown in FIG. 4B, for example, to be displayed on a screen. If there exists a currently viewing user, it can be rejected.

If no response is made to a distribution stop check signal (S19), after a predetermined period of time has elapsed (S20), the broadcast receiver R determines whether or nor forced stop is enabled (S21). If the forced stop is enabled, distribution procedures in step S25 and subsequent are carried out after forced stop. If the forced stop is disabled, procedures for determining the number of distributions in step S15 and subsequent are continued. Namely, if there is no response indicating that reception has been done for a predetermined period of time or more, it is determined that the third television image receiver V3 is not powered ON, or that the third television image receiver V3 broadcasts a completely different program by using another method. Even if distribution is eventually stopped, it can be determined that no problem occurs.

After the third television image receiver V3 has notified receipt of a distribution stop request (S22), in the case where a response of YES or NO is made (S23), it is determined whether this response is accepted or not (S28). If accepted, the notification of distribution stop is transmitted to the third television receiver V3 (S24), and distribution procedures in step 25 and subsequent are carried out. If rejected, procedures for determining the number of distributions in step 15 and subsequent are continued.

In accordance with such procedures, the user can freely change a video image/voice signal distribution destination in a range permitted in a permissible list between a plurality of television image receivers or information recording devices. In this manner, unlike a conventional apparatus, there is no need to carry out complicated works such as frequent wiring and connection changes. It is possible to view an accounting broadcast or the like by distributing it to an arbitrary distribution destination.

### <Broadcast receiver according to second embodiment>

According to a second embodiment of the invention, there is provided a case of acquiring a permissible list of broadcast receivers according to the present invention by reading a recording medium.

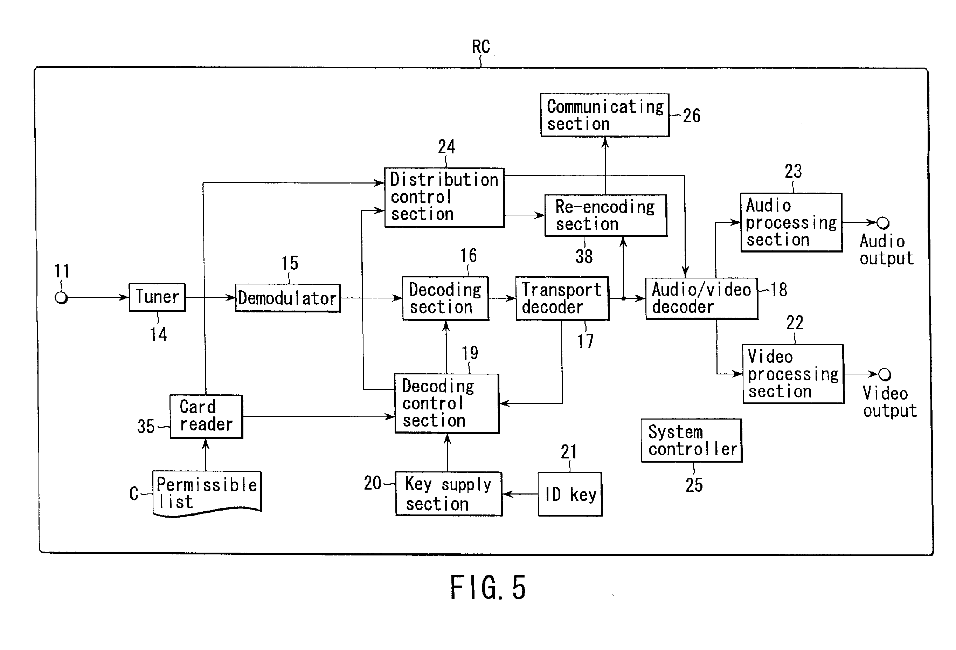

That is, in the embodiment shown in FIG. 1, there is shown a case in which the permissible list L is electronically distributed from the management server S managed by a broadcasting service provider via the modem 24 or the like. The management list itself may not always be electrically distributed. For example, as shown in FIG. 5, a card C represented by a smart card is inserted into the broadcast receiver R, a permissible list is read via a card reader 35, and the read list can be supplied to the broadcast receiver R.

In this manner, permissible list data for deciding a distribution destination according to the present invention can be acquired in a variety of ways. As described above, an arbitrary distribution destination is selected within the range permitted by a permissible list from among a plurality of television image receivers or information recording devices, thereby making it possible to view an accounting broadcast or the like.

### <Processing for changing permissible list according to third embodiment>

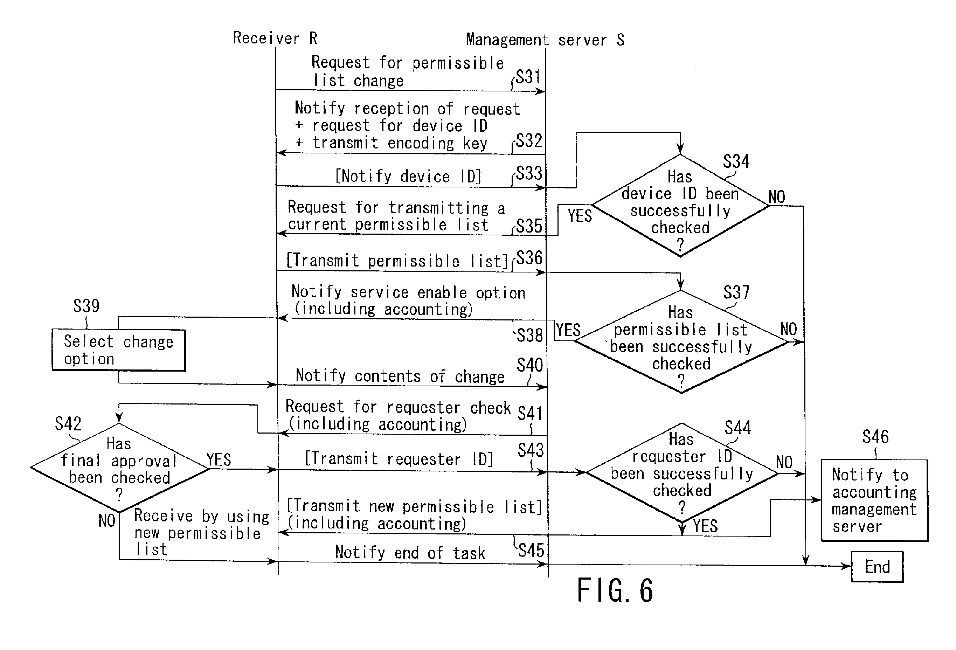

According to a third embodiment of the invention, there is provided a broadcast receiver capable of changing the above-described permissible list. FIG. 6 is a flow chart showing an example of processing for changing a permissible list of broadcast receivers according to the third embodiment of the present invention.

That is, connection to the broadcasting service provider's management server S as shown in FIG. 1, or providing a permissible list of designations to which a user finally connects by means of a removable physical medium as shown in FIG. 5, is close to managing the number of broadcast receivers R that are limited receivers receivable to the broadcasting service provider. Thus, in the case where an attempt is made to increase a total number of particularly connectable devices in such a permissible list, it is possible to request corresponding accounting to the user. An example of procedures for an accounting process when the broadcasting service provider carries out accounting service by providing and/or updating such a permissible list, will be described with reference to FIG. 6.

In such a case, individual check of the users having requested the permissible list and protection of privacy information are important. In particular, in the case where communication is carried out between the management server S and the broadcast receiver R by using a disclosed network represented by Internet, extreme care must be taken for information leakage.

In FIG. 6, communications enclosed in brackets [ ] are procedures encoded and communicated in order to prevent information leakage described below. First, the user's broadcast receiver R provides a request for changing a permissible list to the management server S (S31). Upon the receipt of this request, the server S notifies that it has received the request and requests a device ID. Further, the server S supplies to the first broadcast receiver R an encoding key for protecting information contained in the broadcast receiver R during subsequent communication (S32).

A decoding key is required to decode data encoded by this encoding key. This decoding key can be sensed by the management server S only. For example, as the existing technique, a technique called PGP is available for use. Further, the management server S requests to the broadcast receiver R transmission of an encoding key for encoding data transmitted from the server itself similarly. The mechanism for his request is similar to that described above. Only the broadcast receiver R possessing the decoding key can decode the data encoded by this encoding key.

Having received the above response, the broadcast receiver R encodes its own device ID by an encoding key oriented to the above management server, and returns the ID (S33). The management server S having received this return decodes this device ID and checks whether the device ID itself is valid data or not (S34). The device ID itself is uniquely assigned when the broadcasting service provider provides the broadcast receiver R to the user, and starts service. Only the broadcasting service provider knows valid ID information. By making check of this device ID, it is checked that the broadcast receiver R itself targeted for changing the current permissible list is a regular receiver reliably authorized by the broadcasting service provider itself. This check safeguards against an illegally used device such as an unauthorized receiver.

When this device ID is checked, the management server S requests transmission of the current permissible list to the broadcast receiver R (S35), and the broadcast receiver R returns the fact to the management server S while the permissible list is encoded (S36).

The management server S decodes the received permissible list, and correlates the decoded list with a record of the permissible list managed for each of its own device IDs (S37). When the correlation result is not coincident, it is determined that the corresponding device is illegal in the same way as when the device ID is checked. Then, processing is stopped and terminated in order to reject the subsequent procedures. This process is one of the safeguards against illegal use of device as in device ID check. When it is checked that the permissible list is coincident with the managed permissible list record, the management server S transmits to the broadcast receiver R a user selection option that can be changed by the current service together with the corresponding accounting information (S38). For example, even if an attempt is made to simply increase a total number of receivable devices, it is not desirable that an indefinite number of devices be permitted from the viewpoint of copyright protection described above. Thus, a predetermined degree of upper limit should be set. This upper limit is notified to the broadcast receiver R. Alternatively, when the user wants to add connection permission to a specific new television image receiver, the management server S needs to check whether or not the television image receiver should be permitted. If this check is neglected, when the user making an application for a television image receiver actually uses a recording device, a program can be copied without permission.

Although such a case is not shown in FIG. 6, procedures for obtaining authentication of a device to be additionally received from the broadcast receiver R by the management server S must be followed before proceeding to the next step. For example, as one of the techniques, it is effective to check ID of a device to be newly connected.

Then, the user selects a serviceable option transmitted via the broadcast receiver R (S39), and returns the selection result to the management server S (S40). Having received the return relevant to this option, the management server S requests the broadcast receiver R to transmit the requester's check ID in order to check whether or not the user oneself requesting this service is an authorized user (S41). In accounting-related service, applicants themselves are checked in order to strictly carry out accounting to the service applicants (S42). The simplest way is password check. Highly strict check is using a credit card ID or the like. Information for authentication of the individual applicants is apparently important privacy information. As shown in FIG. 6, it is preferable that return of privacy information from the broadcast receiver R be encoded. This privacy information check serves as final check of utilization of this service. Therefore, it is preferable that the selected option and the corresponding accounting information be provided. By providing this final check, it is possible to give an opportunity that the user stops service by one's discretion such that the user does not mistakenly complete the service procedures.

When the requester's ID is transmitted from the broadcast receiver R (S43), the management server S makes this final check (S44). At a stage at which privacy authentication of this applicant has been successfully checked, a new permissible list is transmitted to the broadcast receiver R (S45), and further, this accounting record is added to the accounting management server managed by the broadcasting service provider (S46). Having received such a new permissible list, based on the list, the broadcast receiver R can carry out a distribution processing for an arbitrary external device relevant to a video image/voice signal in accordance with the above described procedures.

In the third embodiment according to the present invention, the broadcast receiver R thus requests the management server S for a permissible list of distribution destinations, thereby making it possible for the user to freely change the list by one's discretion within the range of options indicated by the management server S. As a result, accounting broadcast or the like can be distributed to a plurality of television image receivers or information recording devices such as hard disk recorders in a flexible manner. In this manner, unlike a conventional apparatus, a video image/voice signal can be distributed to an arbitrary display device or the like without carrying out complicated operation such as frequent wire or connection changes.

### <Optical disk device according to fourth embodiment>

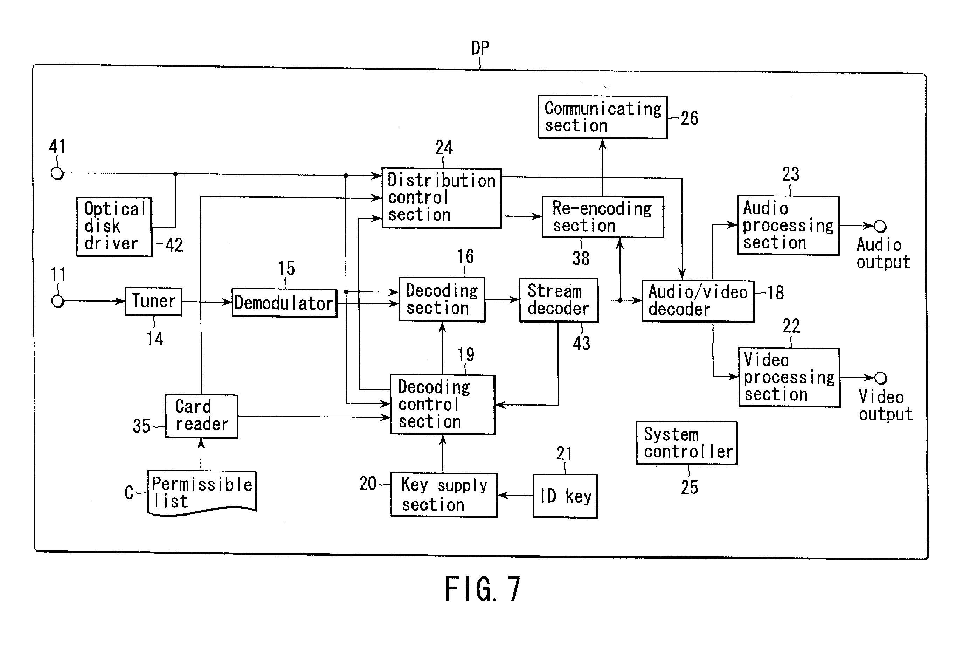

According to a fourth embodiment of the invention, there is provided an optical disk device capable of arbitrarily changing a destination of distributing content information contained in a disk within the range of permissible list relevant to information processing devices such as a plurality of television image receivers. FIG. 7 is a block diagram depicting an example of an optical disk device according to the fourth embodiment of the present invention.

In FIG. 7, in an optical disk device DP according to the present invention, content information such as video image information to be distributed to external devices V1, V2, and V3 is assigned from an optical disk driver 42 for reading a DVD (Digital Versatile Disc) or the like and an external input terminal 41. In addition, a permissible list C is not only assigned after read by a card reader 35, but can be read from the optical disk driver 42.

Further, the optical disk device DP according to the present invention comprises a tuner 11 and a modulator 15 in the same way as the receiver R of FIG. 1. At the same time, this optical disk device can obtain content information to be distributed as a broadcast signal. However, even an optical disk device DP does not comprise the tuner 11 or demodulator 15, the disk can distribute a video image/video signal or the like to an arbitrary one from among a plurality of information processing apparatuses. In this manner, there can be provided an information processing apparatus capable of viewing a video image/voice signal or the like to be protected under copyright by an arbitrary one of the apparatuses given in the permissible list.

In the fourth embodiment shown in FIG. 7, there is shown an example when a receiving permission list is read from the card reader 35. However, the distribution processing according to the present invention can be carried out in a case of reproducing a video image and/or voice recorded in an optical disk 27 illustrated in FIG. 7, or in a case in which a permissible list is recorded on this optical disk. In the case a video image/voice program is provided by using a recording medium such as an optical disk, distributing a permissible list by an optical disk can provide service remarkably readily rather than distributing the list by another medium or distributing the list using broadcasting radio waves.

A typical example of the optical disk 27 is a DVD. The data streams of the current DVD is formed in the shape of program streams. These data streams are different from transport streams for use in broadcasting radio waves. A stream decoder 43 shown in FIG. 7 is compatible with both of the transport streams and program streams. This decoder automatically senses type of the input signal, and operates by switching two functions.

One skilled in the art can achieve the present invention according to a variety of embodiments described above. Further, it would have been obvious for one skilled in the art to anticipate a variety of modifications of these embodiments. Furthermore, even one skilled in the art who does not have an inventive ability would find it possible to apply the present invention to a variety of embodiments. Therefore, the present invention covers wide claims such that no discrepancy occurs with a disclosed principle and novel characteristics, and is not limited to the above described embodiments.

As has been described above in detail, according to the present invention, a video image/voice signal or the like of an accounting broadcast or the like can be distributed from among a plurality of information processing apparatuses within the range permitted in the permissible list. In this manner, there can be provided a broadcast receiver, an information processing apparatus, a communication apparatus, and an information distributing method capable of viewing even highly confidential information on an accounting broadcast or the like by using an arbitrary apparatus.

## Claims

1. A broadcast receiver (R, DP) **characterized by** comprising:
a decoding section (16) which decodes an information signal demodulated upon receipt of an encoded broadcast signal;
a distribution control section (24) which limits to a predetermined number (L) of devices a condition for permitting distribution to an external device (V1, V2, V3), of the information signal decoded by the decoding section; and
a communicating section (26) which identifies the external device under the control of the distribution control section, and distributes the information signal decoded by the decoding section.

2. A broadcast receiver according to claim 1, **characterized in that** the distribution control section controls a distribution destination while the distribution permission condition is defined as the number of the external devices on a type by type basis (FIG. 2).

3. A broadcast receiver according to claim 1, **characterized in that**, when a distribution request is received from one of the external devices (S1), the distribution control section determines whether or not the distribution conforms to the distribution permission condition (S15), and when the determination result is negative, it is notified to the device having made the distribution request that distribution is disabled (S16).

4. A broadcast receiver according to claim 1, **characterized in that**, when a distribution request is received from one of the external devices (S11), the distribution control section determines whether or not the distribution conforms to the distribution permission condition (S15); when the determination result is negative, it is notified to the device having made the distribution request (FIG. 4A) to specify another device whose distribution is to be stopped (S16); and upon receipt of the device specification, distribution stop is checked for the device (S18, FIG. 4B).

5. A broadcast receiver according to claim 1, **characterized by** further comprising a control section (FIG. 6) which outputs a request signal to an external distribution server (S) in order to request a change of the distribution permission condition of the distribution control section, and concurrently, receives a response from the distribution server, and responds to the response, thereby changing the distribution permission condition.

6. A broadcast receiver according to claim 1, **characterized by** further comprising a control section (FIG. 6) which outputs a request signal to an external distribution server (S) in order to request a change of the distribution permission condition of the distribution control section, receives an option (S38) for changing the distribution permission condition including accounting information assigned from the distribution server, and responds to the option (S40), thereby changing the distribution permission condition including the accounting information.

7. A broadcast receiver according to claim 1, **characterized by** further comprising a modem (24) which acquires the distribution permission condition of the distribution control section by carrying out transmission to/reception from an external distribution server (S).

8. A broadcast receiver according to claim 1, **characterized by** further comprising a driver section (35) which mounts a removable recording medium (C), and then, reads information stored therein, thereby acquiring the distribution permission condition of the distribution control section.

9. A broadcast receiver according to claim 1, **characterized by** further comprising:
an information processing apparatus (V1) having:
a first communicating section (27, S11) which transmits to an external broadcast receiver (R) a distribution request signal for requesting distribution of an information signal from the external broadcast receiver;
a second communicating section (27, S17) which, when the external broadcast receiver notifies distribution disable as exceeding a predetermined number of devices under a distribution permission condition according to the distribution request signal of the first communicating section, transmits a distribution stop signal so as to specify another information processing apparatus whose distribution is to be stopped; and
an information processing section (S27) which, when distribution is enabled according to the distribution stop signal of the second communicating section, receives an information signal distributed from the external broadcast receiver, and applies a predetermined processing thereto.

10. A broadcast receiver according to claim 1, **characterized by** further comprising:
an information processing apparatus (V1) having:
an information processing section (27, S27) which receives an information signal from an external broadcast receiver (R), and applies a predetermined processing thereto;
a display section (34, S18, FIG. 4B) which, in the case where a distribution request from another information processing apparatus exceeds a predetermined number of devices under a distribution permission condition, from the external broadcast receiver, receives stop check notification for checking distribution stop of the information signal and displays the received notification by the another information processing apparatus having specified an information processing apparatus whose distribution is to be stopped; and
a communicating section (27, S23) which makes a predetermined response to the external broadcast receiver according to the stop check notification displayed by the display section.

11. A broadcast receiver according to claim 1, **characterized by** further comprising:
a communication apparatus (T) comprising:
a first communicating section (27, S11) which transmits to an external broadcast receiver (R) a distribution request signal for requesting distribution of an information signal from the external broadcast receiver;
a second communicating section (27, S17) which, when the external broadcast receiver notifies distribution disable as exceeding a predetermined number of devices under a distribution permission condition according to the distribution request signal of the first communicating section, transmits a distribution stop signal so as to specify another information processing apparatus whose distribution is to be stopped; and
an output section (29, S27) which, when distribution is enabled according to the distribution stop signal of the second communicating section, receives an information signal distributed from the external broadcast receiver, and outputs the received information signal to an output terminal.

12. A broadcast receiver according to claim 1, **characterized by** further comprising:
a communication apparatus (T) having:
an output section (29, S27) which receives an information signal from an external broadcast receiver (R) and outputs the received information signal to an output terminal;
a first communicating section (27, S18, FIG. 4B) which, in the case where a distribution request from another information processing apparatus exceeds a predetermined number of devices under a distribution permission condition, from the external broadcast receiver, receives stop check notification for checking distribution stop of the information signal and produces image information for displaying the received notification by the another information processing apparatus having specified an information processing apparatus whose distribution is to be stopped; and
a second communicating section (27, S23) which makes a predetermined response to the external broadcast receiver according to the stop check notification displayed based on the image information produced by the first communicating section.

13. A broadcast receiver according to claim 1, **characterized by** further comprising:
a driver section (42) which reads a recording medium in which an encoded information signal is stored.

14. An information distributing method **characterized by** comprising:
decoding (16) an information signal modulated upon receipt of an encoded broadcast signal;
controlling (24) to a predetermined number (L) of devices a condition for permitting distribution of an external device (V1, V2, V3), of the decoded information signal; and
identifying (26) the external device under the control, and distributing the decoded information signal.
